# EUROPEAN PATENT APPLICATION

(11) **EP 4 272 975 A1**
(43) Date of publication of application: **08.11.2023**
(21) Application number: 23167852.5
(22) Date of filing: 13.04.2023
(51) Int. Cl.: B60B 27/00, B60B 27/02, B60B 27/04

(54) **HUB DEVICE**

(30) Priority: 06.05.2022 TW 111204665 U
(71) Applicant: Lee, Chung-Che, Taichung City 436 (TW)
(72) Inventor: Lee, Chung-Che, Taichung City 436 (TW)
(74) Representative: Lang, Christian

(57) **Abstract**

A hub device (1) is provided, including: a hub shell (10), defining an axial direction (A), including a room (11) open in the axial direction (A), an inner wall of the room (11) including an annular toothed portion (12) and an annular trench (15); a ratchet ring (20), including an outer toothed portion (21), the ratchet ring (20) being disposed in the room (11), the outer toothed portion (21) and the annular toothed portion (12) being engaged with each other; and a blocking member (30), disposed within the annular trench (15), the blocking member (30) and the ratchet ring (20) being blocked with each other in the axial direction (A).

## Description

### BACKGROUND OF THE INVENTION

### Field of the Invention

The present invention relates to a hub device.

### Description of the Prior Art

In a conventional hub device, such as disclosed in TWM488455, the ratchet ring is arranged on the inner wall of the receiving space of a hub shell, the inner surface of the ratchet ring has a plurality of teeth, the outer wall of the ratchet ring has an external thread portion, the inner wall of the hub shell has an inner thread portion which is screwed with the outer thread portion so that the ratchet ring is fixed on the inner wall of the hub shell.

The hub shell is usually made of aluminum alloy, and the ratchet ring is made of iron. When the ratchet ring drives the hub shell to rotate, the inner thread of the hub shell is easily worn so that the combined structure of the ratchet ring and the hub shell is weak and not durable. In addition, the depth of the thread groove of the inner thread portion is shallow, so it cannot bear large torsion force. As a result, it is not suitable to be applied for a device requiring large torsion force (such as an electric vehicle).

The present invention is, therefore, arisen to obviate or at least mitigate the above-mentioned disadvantages.

### SUMMARY OF THE INVENTION

The main object of the present invention is to provide a hub device which is capable of providing large torque and is durable.

To achieve the above and other objects, a hub device is provided, including: a hub shell, defining an axial direction, including a room open in the axial direction, an inner wall of the room including an annular toothed portion and an annular trench; a ratchet ring, including an outer toothed portion, the ratchet ring being disposed in the room, the outer toothed portion and the annular toothed portion being engaged with each other; and a blocking member, disposed within the annular trench, the blocking member and the ratchet ring being blocked with each other in the axial direction.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a stereogram of an exemplary embodiment of the present invention;
Fig. 2 is a breakdown drawing of an exemplary embodiment of the present invention;
Fig. 3 is a cross-sectional view of an exemplary embodiment of the present invention;
Fig. 4 is an enlargement of Fig. 3; and
Fig. 5 is another cross-sectional view of an exemplary embodiment of the present invention.

### DETAILED DESCRIPTION OF THE PREFERRED EMBODIMENTS

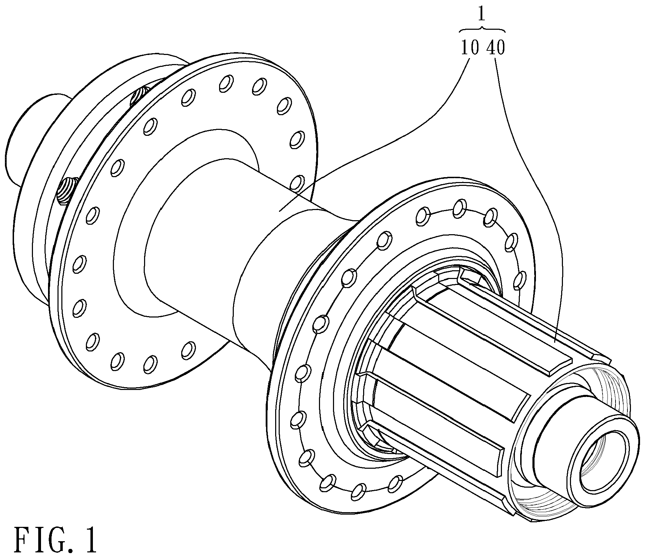

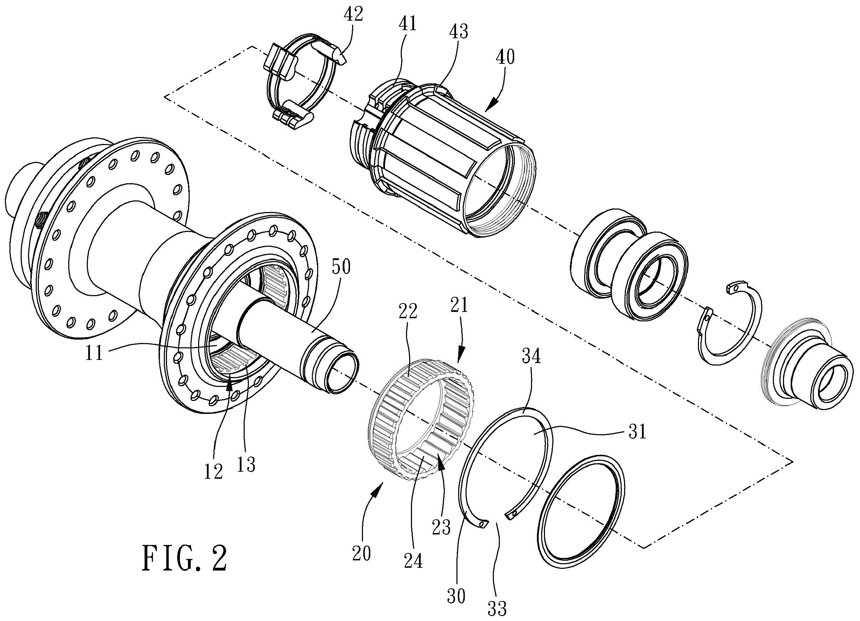

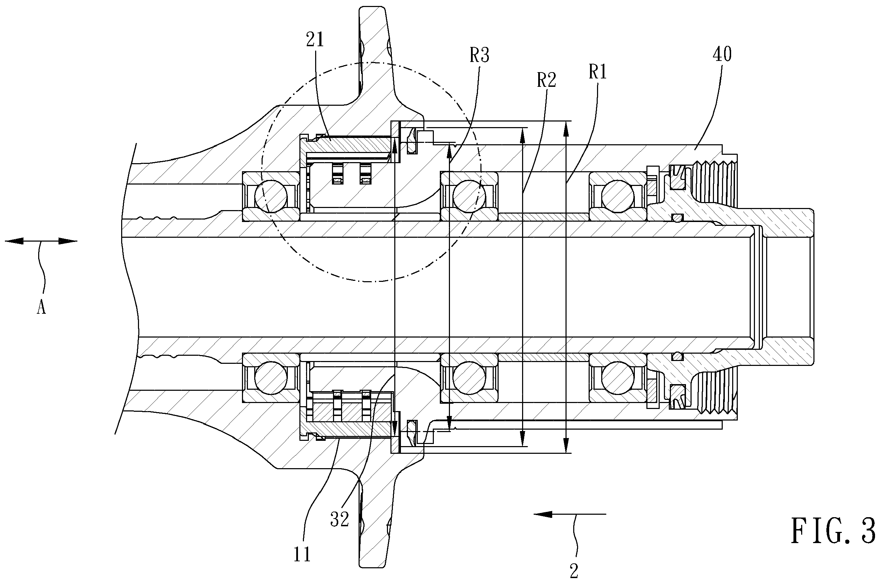

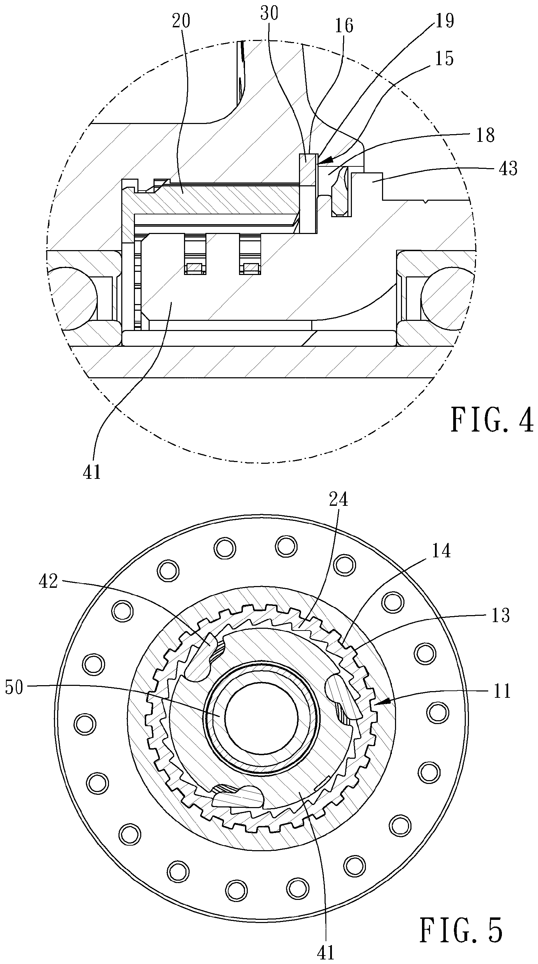

Please refer to Figs. 1 to 5 for an exemplary embodiment of the present invention. A hub device 1 of the present invention includes a hub shell 10, a ratchet ring 20 and a blocking member 30.

The hub shell 10 defines an axial direction A and includes a room 11 open in the axial direction A. An inner wall of the room 11 includes an annular toothed portion 12 and an annular trench 15. In this embodiment, the annular trench 15 is disposed around a central line of the hub shell 10. The ratchet ring 20 includes an outer toothed portion 21, the ratchet ring 20 is disposed in the room 11, and the outer toothed portion 21 and the annular toothed portion 12 are engaged with each other so that the ratchet ring 20 and the hub shell 10 are rotatable with each other. The blocking member 30 is disposed within the annular trench 15, and the blocking member 30 and the ratchet ring 20 are blocked with each other in the axial direction A. In this embodiment, the blocking member 30 is at least partially protrusive radially beyond the annular trench 15, and the blocking member 30 and an end of the ratchet ring 20 are blocked with each other in the axial direction A. As such, it can bear large torque and is durable, and the blocking member 30 blocks the ratchet ring 20 from detaching from the room 11 in the axial direction A.

In this embodiment, the annular toothed portion 12 and the hub shell 10 are integrally formed of one piece.

The outer toothed portion 21 includes a plurality of outer teeth 22, the annular toothed portion 12 includes a plurality of inner recesses 13, the plurality of outer teeth 22 and the plurality of inner recesses 13 are engaged with each other, and each of the plurality of outer teeth 22 and each of the plurality of inner recesses 13 correspond to each other in shape and extend in the axial direction A. Specifically, the annular toothed portion 12 further includes a plurality of projections 14, the plurality of projections 14 and the plurality of inner recesses 13 are circumferentially arranged alternatively, the plurality of projections 14 are engaged with the plurality of outer teeth 22, and each of the plurality of projections 14 extends in the axial direction A so that the plurality of outer teeth 22 and the plurality of projections 14 can contact each other with large contact areas for effectively transmitting torque.

The blocking member 30 includes an outer annular surface 34, the annular trench 15 includes an inner annular surface 16 abutted against the outer annular surface 34 of the blocking member 30 so that the blocking member 30 can be stably supported during operation of the hub device 1.

The blocking member 30 is annular and includes a notch 33. Specifically, the blocking member 30 is radially deformable relative to the notch 33 such that the blocking member 30 can be sufficiently deformed and engaged into the annular trench 15. A dimension of the annular trench 15 in the axial direction A is larger than a thickness of the blocking member 30 in the axial direction A, which is advantageous for mounting of the blocking member 30.

The hub device 1 further includes a sprocket mounting seat 40, the sprocket mounting seat 40 includes a pawl mounting seat 41 and a plurality of pawls 42, the plurality of pawls 42 are disposed on the pawl mounting seat 41, and the pawl mounting seat 41 is disposed through the room 11. The ratchet ring 20 further includes an inner toothed portion 23, the plurality of pawls 42 are engaged with the inner toothed portion 23, and the blocking member 30 is disposed between the pawl mounting seat 41 and the ratchet ring 20. The sprocket mounting seat 40 is configured to drive and rotatable with the ratchet ring 20. The inner toothed portion 23 and the outer toothed portion 21 are integrally formed on inner and outer sides of the ratchet ring 20, respectively.

The inner toothed portion 23 includes a plurality of inner teeth 24, and the plurality of pawls 42 are engaged with the plurality of inner teeth 24, which provides the ratcheting function.

The blocking member 30 is annular, the sprocket mounting seat 40 further includes an outer flange 43, and the outer flange 43 and the ratchet ring 20 are located at opposing sides of the blocking member 30. The outer flange 43 has an outer diametric dimension R3 smaller than a diametric dimension 32 of a through hole 31 of the blocking member 30, and the outer flange 43 and the ratchet ring 20 correspond to each other in the axial direction A. When the sprocket mounting seat 40 is driven, the outer flange 43 and the blocking member 30 cannot interfere with each other. Preferably, an outer slot 18 is formed on an inner wall of the room 11, the sprocket mounting seat 40 is assembled to the room 11 in an assembling direction 2 parallel to the axial direction A, and the outer slot 18, the annular trench 15 and the annular toothed portion 12 are arranged in order in the assembling direction 2. The annular trench 15 has an inner diametric dimension R1 larger than an inner diametric dimension R2 of the outer slot 18. A stepped portion 19 is disposed between the outer slot 18 and the annular trench 15, the blocking member 30 is blockable by the stepped portion 19 in the axial direction A, and the outer flange 43 is received in the outer slot 18. As such, the blocking member 30 and the outer flange 43 can be gapped, and the contact area of and friction between the annular trench 15 and the blocking member 30 can be lowered.

The hub device 1 further includes an axle 50, and the axle 50 is disposed through the hub shell 10, the ratchet ring 20, the blocking member 30 and sprocket mounting seat 40.

Given the above, in the hub device, the outer toothed portion of the ratchet ring and the annular toothed portion of the hub shell are engaged with each other, and the blocking member blocks the ratchet ring, so that it can provide large torque and the ratchet ring can be well restricted.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A hub device (1), including:
a hub shell (10), defining an axial direction (A), including a room (11) open in the axial direction (A), an inner wall of the room (11) including an annular toothed portion (12) and an annular trench (15);
a ratchet ring (20), including an outer toothed portion (21), the ratchet ring (20) being disposed in the room (11), the outer toothed portion (21) and the annular toothed portion (12) being engaged with each other; and
a blocking member (30), disposed within the annular trench (15), the blocking member (30) and the ratchet ring (20) being blocked with each other in the axial direction (A).

2. The hub device (1) of claim 1, further including a sprocket mounting seat (40), wherein the sprocket mounting seat (40) includes a pawl mounting seat (41) and a plurality of pawls (42), the plurality of pawls (42) are disposed on the pawl mounting seat (41), the pawl mounting seat (41) is disposed through the room (11), the ratchet ring (20) further includes an inner toothed portion (23), the plurality of pawls (42) are engaged with the inner toothed portion (23), and the blocking member (30) is disposed between the pawl mounting seat (41) and the ratchet ring (20).

3. The hub device (1) of claim 1, wherein the blocking member (30) is at least partially protrusive radially beyond the annular trench (15), and the blocking member (30) and an end of the ratchet ring (20) are blocked with each other in the axial direction (A).

4. The hub device (1) of claim 2, wherein the blocking member (30) is annular, the sprocket mounting seat (40) further includes an outer flange (43), the outer flange (43) and the ratchet ring (20) are located at opposing sides of the blocking member (30), the outer flange (43) has an outer diametric dimension (R3) smaller than a diametric dimension (32) of a through hole (31) of the blocking member (30), and the outer flange (43) and the ratchet ring (20) correspond to each other in the axial direction (A).

5. The hub device (1) of claim 4, wherein an outer slot (18) is formed on an inner wall of the room (11), the sprocket mounting seat (40) is assembled to the room (11) in an assembling direction (2) parallel to the axial direction (A), the outer slot (18), the annular trench (15) and the annular toothed portion (12) are arranged in order in the assembling direction (2), the annular trench (15) has an inner diametric dimension (R1) larger than an inner diametric dimension (R2) of the outer slot (18), a stepped portion (19) is disposed between the outer slot (18) and the annular trench (15), the blocking member (30) is blockable by the stepped portion (19) in the axial direction (A), and the outer flange (43) is received in the outer slot (18).

6. The hub device (1) of claim 1, wherein the blocking member (30) is annular and includes a notch (33) radially opened.

7. The hub device (1) of claim 1, wherein the outer toothed portion (21) includes a plurality of outer teeth (22), the annular toothed portion (12) includes a plurality of inner recesses (13), the plurality of outer teeth (22) and the plurality of inner recesses (13) are engaged with each other, and each of the plurality of outer teeth (22) and each of the plurality of inner recesses (13) correspond to each other in shape and extend in the axial direction (A).

8. The hub device (1) of claim 7, wherein the annular toothed portion (12) further includes a plurality of projections (14), the plurality of projections (14) and the plurality of inner recesses (13) are circumferentially arranged alternatively, the plurality of projections (14) are engaged with the plurality of outer teeth (22), and each of the plurality of projections (14) extends in the axial direction (A).

9. The hub device (1) of claim 1, wherein the blocking member (30) includes an outer annular surface (34), and the annular trench (15) includes an inner annular surface (16) abutted against the outer annular surface (34) of the blocking member (30).

10. The hub device (1) of claim 5, wherein the hub device (1) further includes an axle (50), and the axle (50) is disposed through the hub shell (10), the ratchet ring (20), the blocking member (30) and sprocket mounting seat (40); the inner toothed portion (23) includes a plurality of inner teeth (24) arranged circumferentially, and the plurality of pawls (42) are engaged with the plurality of inner teeth (24); the blocking member (30) is annular and includes a notch (33) radially opened; the blocking member (30) is radially deformable relative to the notch (33); the outer toothed portion (21) includes a plurality of outer teeth (22), the annular toothed portion (12) includes a plurality of inner recesses (13), the plurality of outer teeth (22) and the plurality of inner recesses (13) are engaged with each other, and each of the plurality of outer teeth (22) and each of the plurality of inner recesses (13) correspond to each other in shape and extend in the axial direction (A); the blocking member (30) is at least partially protrusive radially beyond the annular trench (15), and the blocking member (30) and an end of the ratchet ring (20) are blocked with each other in the axial direction (A).
